# EUROPÄISCHE PATENTANMELDUNG

(11) **EP 1 372 328 A1**
(43) Veröffentlichungstag der Anmeldung: **17.12.2003**
(21) Anmeldenummer: 02012988.8
(22) Anmeldetag: 12.06.2002
(51) Int. Cl.: H04M 3/56

(54) **Einrichtung und Verfahren zum Aufbau einer Konferenzschaltung in Telekommunikationsnetzen**

(71) Anmelder: Siemens AG, 80333 München (DE)
(72) Erfinder: Vencour, Marcel, 1130 Wien (AT)
(74) Vertreter: Berg, Peter, Dipl.-Ing.

(57) **Zusammenfassung**

Es wird eine Einrichtung zum Aufbau einer Konferenzschaltung in Telekommunikationsnetzen angegeben, welche Mittel zum Anschluss als Teilnehmer an das Telekommunikationsnetz , Mittel zur Erfassung der vorgesehenen Konferenzteilnehmer (KT) und Mittel zur Einleitung der Konferenz durch Anwahl der vorgesehenen Konferenzteilnehmer (KT) umfaßt.

Mit der erfindungsgemäßen Einrichtung kann ein Initiator bereits vor Beginn der Konferenz ohne Zeitdruck die Konferenzteilnehmer auswählen. Die Anwahl und Zusammenschaltung erfolgt dann rasch hintereinander mittels der erfindungsgemäßen Einrichtung, sodass im Gegensatz zu herkömmlichen Telefonkonferenzen die Wartezeiten bis zum vollständigen Aufbau der Konferenzschaltung für die zuerst gewählten Teilnehmer vergleichsweise gering sind.

## Beschreibung

Die Erfindung betrifft eine Einrichtung und ein Verfahren zum Aufbau einer Konferenzschaltung in Telekommunikationsnetzen.

Unter Konferenzschaltung versteht man allgemein die Zusammenschaltung mehrerer Teilnehmer eines Telekommunikationsnetzes zu einem einzigen, abrechenbaren Vorgang, bei dem alle untereinander kommunizieren können. Unterschieden werden dabei Systeme auf Text- Audio- und Videobasis und entsprechende Kombinationen. Die technisch fortschrittlichste Variante stellen die sogenannten Computerkonferenzen dar, bei denen neben Audio-und Videodaten die Konferenzteilnehmer auch gemeinsam Dokumente mit Texten und Graphiken einsehen und bearbeiten können.

Die Einleitung einer Konferenz erfolgt nach dem Stand der Technik üblicherweise dadurch, dass ein Teilnehmer der Reihe nach die weiteren Konferenzteilnehmer anruft und mit entsprechenden Tasteneingaben die Zusammenschaltung veranlasst. Dieser Vorgang ist relativ zeitaufwendig und erfordert entsprechend geschulte Konferenzleiter.

Der Erfindung liegt daher die Aufgabe zugrunde eine Einrichtung und ein Verfahren anzugeben, mit dem Konferenzschaltungen auf einfache Weise aufgebaut werden können.

Erfindungsgemäß geschieht dies mit einer Einrichtung zum Aufbau einer Konferenzschaltung in Telekommunikationsnetzen, wobei die Einrichtung Mittel zum Anschluss als Teilnehmer an das Telekommunikationsnetz, Mittel zur Erfassung der vorgesehenen Konferenzteilnehmer und Mittel zur Einleitung der Konferenz durch Anwahl der vorgesehenen Konferenzteilnehmer umfaßt. Mit der erfindungsgemäßen Einrichtung kann ein Initiator bereits vor Beginn der Konferenz ohne Zeitdruck die Konferenzteilnehmer auswählen. Die Anwahl und Zusammenschaltung erfolgt dann rasch hintereinander mittels der erfindungsgemäßen Einrichtung, sodass im Gegensatz zu herkömmlichen Telefonkonferenzen die Wartezeiten bis zum vollständigen Aufbau der Konferenzschaltung für die zuerst gewählten Teilnehmer vergleichsweise gering sind.

Durch den Anschluss der Einrichtung nach Art eines Teilnehmers an das Kommunikationsnetz und Nutzung der bereits vorhandenen Konferenzdienste, wird überdies eine einfache und kostensparende Integration in bestehende Kommunikationsnetze ermöglicht.

Vorteilhaft ist es, wenn die Einrichtung zum Anschluss an Kommunikationsnetze, die auf dem Internet-Protokoll beruhen, vorgesehen ist. Das Internet als größtes und bekanntestes Computernetzwerk bietet seinen Nutzern wohl die umfangreichsten Kommunikationsmöglichkeiten, die mit der Erfindung insbesondere dann genutzt werden können, wenn die Einrichtung zum Aufbau von Multimedia-Konferenzschaltungen und zur Abfrage inwieweit die vorgesehenen Konferenzteilnehmer multimediafähig sind, ausgestaltet ist.

Vorteilhaft ist es weiterhin, wenn die Einrichtung Mittel zur Verständigung der vorgesehenen Konferenzteilnehmer umfasst. Damit kann, wenn der Termin der Konferenz in der Zukunft liegt, die Verfügbarkeit der vorgesehenen Teilnehmer erhöht werden. Diese Verständigung kann beispielsweise per Email erfolgen, der Termin kann auch automatisch in einen elektronischen Kalender der vorgesehenen Teilnehmer eingetragen werden. Mittels elektronischem Kalender kann bei entsprechender Ausgestaltung der Erfindung auch die Verfügbarkeit der vorgesehenen Teilnehmer überprüft werden und ggf. dem Initiator der Konferenz angezeigt werden. In Zusammenhang mit dem Einsatz der Erfindung im Internet ist eine Realisierung der Einrichtung als Anwendung (Applikation) auf einem Server des Kommunikationsnetzes besonders zweckmäßig.
Vorteilhaft ist es, wenn der Verbindungsaufbau zu den vorgesehenen Konferenzteilnehmern KT nach dem Session Initiation Protocol SIP erfolgt.

Die Erfindung wird anhand eines in der Fig. dargestellten Ausführungsbeispieles näher erläutert welches den Einsatz in einem Kommunikationsnetz basierend auf dem Internet-Protokoll zeigt. Die Einrichtung ist dabei als Applikation auf einem Server KS des Kommunkationsnetzes realisiert.

Der Verbindungsaufbau zwischen dem Server KS und den vorgesehenen Teilnehmern KT erfolgt nach dem sogenannten Session Initiation Protocol SIP, einem standardisierten Protokoll für Multimedia- Verbindungen zwischen verschiedenen Endgeräten in Kommunikationsnetzen basierend auf dem Internet-Protokoll. Mittels Session Initiation Protocol SIP können derartige Verbindungen aufgebaut, verwaltet, verändert und beendet werden. Damit entspricht die Aufgabe des Session Initiation Protocols der Aufgabe von Signalisierungsprotokollen in herkömmlichen Telefonnetzen.

Das Session Initiation Protocol SIP eignet sich dabei sowohl für Verbindungen zwischen zwei Teilnehmern KT des Kommunikationsnetzes, als auch für Verbindungen zwischen mehreren Teilnehmern KT und den Ein-und Austritt von Teilnehmern während bestehender Verbindungen. Der Schwerpunkt des Einsatzes betrifft Kommunikationsnetze nach dem Internet-Protokoll, das Session Initiation Protocol eignet sich aber auch für den Einsatz in anderen paketorientierten Netzen. Es umfaßt insbesondere folgende Funktionalitäten:

Lokalisierung eines Zielteilnehmers, Bestimmung der Multimediafähigkeit aller Teilnehmer, Bestimmung der Verfügbarkeit eines Zielteilnehmers, wenn ein Ruf nicht komplettiert werden kann, weil ein Zielteilnehmer nicht verfügbar ist, wird über das Session Initiation Protocol ermittelt, ob der Zielteilnehmer bereits telefoniert, oder aber nicht erreichbar ist und übermittelt eine entsprechende Meldung an den Ursprungsteilnehmer Aufbau einer Verbindung (Session) zwischen den Teilnehmern und ggf. Ein- und Austritt von Teilnehmern während der Verbindung.

Session Initiation Protocol ist ein Peer-to-Peer Protokoll, d.h. für die Kommunikation von gleichberechtigten Einheiten, sogenannten User Agents gedacht. Diese User Agents können je nach Verbindung entweder als User Agent Clients oder als User Agent Server tätig werden, der User Agent Client initiiert eine Anforderung, während der User Agent Server eine empfangene Anforderung dem Zielteilnehmer übermittelt und gegebenenfalls eine Antwort an den Ursprungsteilnehmer sendet.

In einer physikalischen Betrachtungsweise können die Komponenten eines Kommunikationsnetzes nach dem Session Initiation Protocol in zwei Kategorien unterteilt werden: Clients und Server.

Clients können sein: Telefone, insbesondere sogenannte Softphones, d.h. Personalcomputer mit integrierten Telefonen, die entweder als User Agent Clients oder als User Agent Server tätig werden können und Gateways zur Verbindungssteuerung, insbesondere auch als "Dolmetscher" zwischen unterschiedlichen Übertragungsformaten und Kommunikationsverfahren.

### Die Kategorie der Server umfasst:

Proxy-Server RS , die in Vertretung eines Clients Meldungen des Session Initiation Protocols weiterleiten;
Redirect Server, welche den Client über den oder die nächsten Hops, also die Übertragung eines Datenpaketes informieren, und
Registrar Server, die Anfragen von User Agent Clients zur Registrierung ihrer derzeitigen Adresse verwalten.

Der Ablauf eines typischen Verbindungsaufbaus nach dem Session Initiation Protocol SIP ist wie folgt: Die Nutzer werden über ihre Registrar Server mit der ihnen zugeordneten SIP-Adresse im Format userID@gateway.com im SIP-Kommunikationsnetz registriert. Der Registrar Server leitet diese Information auf Anforderung weiter.

Wenn ein Nutzer einen Anruf initiert, wird eine SIP-Anforderung an einen SIP-Server (Proxy Server oder Redirect Server) geleitet. Die Anforderung umfaßt die Adresse des Anrufers und die Adresse des gewünschten Zielteilnehmers. Folgende Anforderungen sind vorgesehen:
- INVITE:: Aufforderung zur Teilnahme an einer Verbindung
- BYE:: Beenden einer Verbindung zwischen zwei Teilnehmern
- OPTIONS:: Abfrage der Verbindungsoptionen hinsichtlich der Möglichkeiten des Teilnehmers und seines Endgerätes (mit/ohne Bild etc)
- STATUS:: Informationsaustausch zwischen Servern über den aktuellen Stand eines Signalisierungsvorganges
- CANCEL:: Beendigung einer Suche
- ACK:: Positive Bestätigung eines INVITE
- REGISTER:: Überträgt Informationen den Standort betreffend an einen Server

Im Falle eines Verbindungsaufbaues über einen Proxy Server sendet der rufende USER AGENT in einem ersten Schritt eine INVITE-Aufforderung an den Proxy Server, dieser bestimmt den Pfad oder die Pfade für die Datenübertragung zwischen den Teilnehmern und leitet daraufhin die Anforderung an den/die Zielteilnehmer weiter. Diese antworten an den Proxy Server, welcher die Antwort an den Anrufer weiterleitet und eine Verbindung zwischen den Teilnehmern nach einem Real-time Transfer Protocol einrichtet.

Erfindungsgemäß wird nun auf einem Rechner KS, der in ein auf dem Internet-Protokoll beruhendes Kommunikationsnetz eingebunden ist, eine Anwendung installiert, welche einen User Agent gemäß dem beschriebenen Session Initiation Protocol SIP bildet. Die Anwendung verfügt über eine entsprechende Bedieneroberfläche WEB-PORTAL, vorzugsweise eine interaktiv auszufüllende Eingabemaske nach der HTML-Seitenbeschreibungssprache, auf welches mittels eines entsprechenden Browsers über Hypertext Transfer Protocol Http zugegriffen werden kann.

In diese Eingabemaske werden vom Initiator der Konferenz die Art der gewünschten Kommunikation (Audio, Video etc.), der Konferenztermin und die vorgesehenen Konferenzteilnehmer KT , zu denen er selbst gehören kann, aber nicht muß, eingetragen.

Dazu ist es auch denkbar, daß der Initiator von der Anwendung bereits als Teilnehmer der Konferenzschaltung eingetragen wird, d.h. ein Teilnehmerfeld vorbelegt wird.
Von der Anwendung werden die Adressen der vorgesehenen Konferenzteilnehmer KT und die Multimediafähigkeiten ihres Endgerätes ermittelt und auf der Eingabemaske dargestellt. Dabei können Konfliktsituationen zwischen der ausgewählten Kommunikationsart und den Möglichkeiten eines Konferenzteilnehmers KT durch optische Hervorhebung des Teilnehmers dargestellt werden.

Mittels Zugriff auf einen elektronischen Kalender des Konferenzteilnehmers KT wird dessen Verfügbarkeit im für die Konferenz vorgesehenen Zeitraum überprüft und dem Initiator bekanntgegeben. Dieser hat somit die Möglichkeit während des Ausfüllvorganges auch die Verfügbarkeit der vorgesehenen Konferenzteilnehmer KT zu überprüfen und gegebenenfalls eine Verschiebung und Optimierung des Konferenztermines vorzunehmen. Nach Abschluss der Eingaben wird der Zeitraum der Konferenz in die elektronischen Kalender der vorgesehenen Konferenzteilnehmer KT entsprechend eingetragen. Mit diesem Abschluss wird die Anwendung in einen Wartezustand versetzt, aus dem sie zum vorgesehenen Beginnzeitpunkt der Konferenz _{"}erwacht". Danach stellt sie auf der Grundlage der getätigten Eingaben der Reihe nach die Verbindung zu den einzelnen Teilnehmern her. Diese werden überdies je nach Verbindungsart per Sprache; Text oder optisch über die Konferenz informiert. Dazu ist es auch denkbar, dass bei Aufbau der Konferenz der Initiator einen Einleitungstext erstellt und dieser entweder als Text oder Sprachdaten in der Anwendung gespeichert und den vorgesehenen Teilnehmern nach Herstellen der Verbindung zugespielt wird.

Nach der solcherart erfolgten Einleitung der Konferenz kann die Anwendung als Teilnehmer wieder weggeschaltet werden. Die Konferenzschaltung wird dann mit Auflegen des letzten Teilnehmers KT beendet.

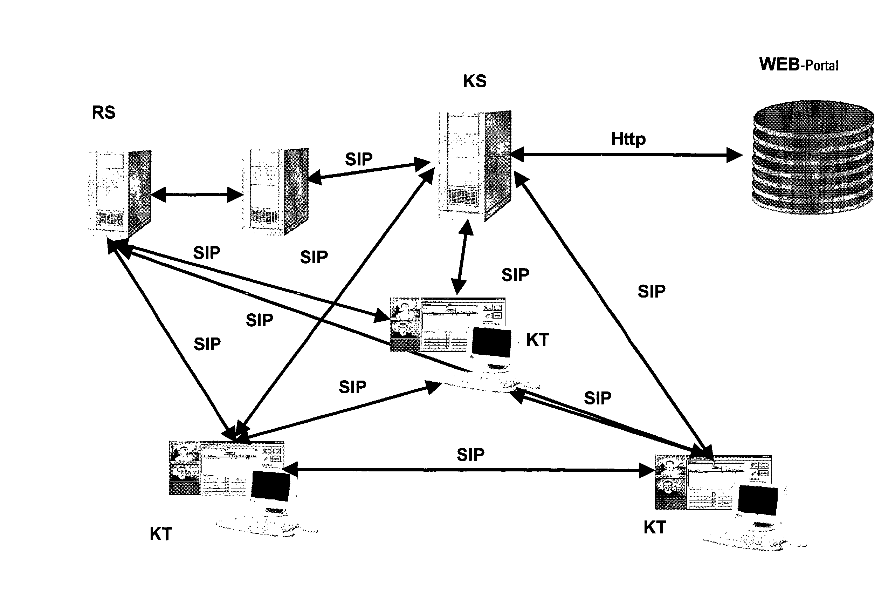

## Patentansprüche

1. Einrichtung zum Aufbau einer Konferenzschaltung in Telekommunikationsnetzen, **dadurch gekennzeichnet, dass** die Einrichtung Mittel zum Anschluss als Teilnehmer an das Telekommunikationsnetz, Mittel zur Erfassung der vorgesehenen Konferenzteilnehmer (KT) und Mittel zur Einleitung der Konferenz durch Anwahl der vorgesehenen Konferenzteilnehmer (KT) umfasst.

2. Einrichtung nach Anspruch 1 **dadurch gekennzeichnet, dass** die Einrichtung zum Anschluss an Kommunikationsnetze, die auf dem Internet-Protokoll beruhen, vorgesehen ist.

3. Einrichtung nach Anspruch 1 oder 2, **dadurch gekennzeichnet, dass** sie Mittel zur Verständigung der vorgesehenen Konferenzteilnehmer (KT) umfasst.

4. Einrichtung nach einem der Ansprüche 1 bis 3, **dadurch gekennzeichnet, dass** sie Mittel zur Überprüfung der Verfügbarkeit der vorgesehenen Teilnehmer (KT) umfaßt.

5. Einrichtung nach Anspruch 2, **dadurch gekennzeichnet, dass** die Einrichtung als Anwendung auf einem Server (KS) des Kommunikationsnetzes verwirklicht ist.

6. Einrichtung nach einem der Ansprüche 1 bis 5, **dadurch gekennzeichnet, dass** sie zum Aufbau von Multimedia-Konferenzschaltungen ausgestaltet ist.

7. Einrichtung nach Anspruch 2, **dadurch gekennzeichnet, dass** der Verbindungsaufbau zu den vorgesehenen Konferenzteilnehmern nach dem Session Initiation Protocol (SIP) erfolgt.

8. Einrichtung nach Anspruch 6, **dadurch gekennzeichnet, dass** Mittel zur Abfrage der Multimedia-Möglichkeiten der vorgesehenen Konferenzteilnehmer (KT) und zur Anzeige des Ergebnisses vorgesehen sind.

9. Verfahren zum Aufbau einer Konferenzschaltung in Telekommunikationsnetzen mit einer Einrichtung nach einem der Ansprüche 1 bis 8, mit folgenden Verfahrensschritten:
die vorgesehenen Konferenzteilnehmer (KT) werden erfasst, der Zeitpunkt des Beginns der Konferenz wird festgelegt die Konferenz wird durch Anwahl der vorgesehenen Konferenzteilnehmer (KT) eingeleitet.

10. Verfahren zum Aufbau einer Konferenzschaltung nach Anspruch 9, **dadurch gekennzeichnet, dass** die vorgesehenen Teilnehmer (KT) einleitend über Art und Zweck der Konferenz informiert werden
